# EUROPEAN PATENT APPLICATION

(11) **EP 3 173 941 A1**
(43) Date of publication of application: **31.05.2017**
(21) Application number: 15199171.8
(22) Date of filing: 10.12.2015
(51) Int. Cl.: G06F 17/30

(54) **WEBSITE SIMPLIFYING METHOD AND WEBSITE SIMPLIFYING DEVICE USING THE SAME**

(30) Priority: 26.11.2015 CN 201510836529
(71) Applicant: Institute for Information Industry, Taipei City 106 (TW)
(72) Inventor: CHIU, Yu-Shian, Taoyuan City 330 (TW); HSIAO, Hui-I, Yunlin County 655 (TW); CHI, Chih-Kai, New Taipei City 236 (TW)
(74) Representative: Viering, Jentschura & Partner mbB Patent- und Rechtsanwälte

(57) **Abstract**

The present disclosure illustrates a website simplifying method including following steps: acquiring a website having a plurality of web pages; analyzing Uniform Resource Locator (URL) addresses of the web pages; establishing a website-structure in accordance with the URL addresses of the web pages; and reestablishing guiding links of the web pages to generate a criss-cross browse-associating table. The website-structure has a plurality of website-structure levels in which respectively have at least one of web pages. The criss-cross browse-associating table records reestablished guiding links of the web pages and a criss-cross structure is formed by the reestablished guiding links of the web pages.

## Description

### BACKGROUND

### Field of Invention

The present disclosure relates to a website simplifying method. More particularly, the present disclosure relates to a website simplifying method which is able to simplify the website structure to provide intuitively operating, and relates to the website simplifying device using the same.

### Description of Related Art

With the digital generation, the amount of information provided from the website is rapidly increased. Users could browse web pages of the website through an electronic device such as a computer, a notebook, a smartphone, a tablet, or etc. for acquiring the news or information.

Taking the computer or the notebook, the users usually browse the web pages by operating a mouse. In practice, the users can choose the web pages they want to browse by clicking a left click (or a right click) of the mouse, and browse by a wheel of the mouse. And taking the smartphone or the tablet, the users are able to intuitively browse the web pages by touching a touch screen.

However, one website may include a ton of jump links (i.e., hyperlinks), and further may link to a plurality of web pages. The jump links of the website are disordered and have no rule, which causes that the levels of web pages are indistinct. Thus, the websites are unfriendly to the users for browsing.

### SUMMARY

The present disclosure provides a website simplifying method including following steps: STEP A: acquiring a website having a plurality of web pages. STEP B: analyzing Uniform Resource Locator (URL) addresses of the web pages; STEP C: establishing a website-structure in accordance with the URL addresses of the web pages; and STEP D: reestablishing guiding links of the web pages to generate a criss-cross browse-associating table. The website-structure has a plurality of website-structure levels in which respectively have at least one of web pages. The criss-cross browse-associating table records reestablished guiding links of the web pages and a criss-cross structure is formed by the reestablished guiding links of the web pages.

The present disclosure provides a website simplifying method including following steps: STEP A: acquiring a website having a plurality of web pages. STEP B: analyzing Uniform Resource Locator (URL) addresses of the web pages; STEP C: establishing a website-structure in accordance with the URL addresses of the web pages; and STEP D: reestablishing guiding links of the web pages to generate a bilateral browse-associating table. The website-structure has a plurality of website-structure levels in which respectively have at least one of web pages. The bilateral browse-associating table records reestablished guiding links of the web pages and a bilateral structure is formed by the reestablished guiding links of the web pages.

The present disclosure provides a website simplifying device. The device includes a website downloader, a website-structure generator, and a browse-associating table generator. The website-structure generator is coupled to the website downloader. The browse-associating table generator is coupled to the website-structure generator. The website downloader is operatively configured to acquire a website having a plurality of web pages. The website-structure generator is operatively configured to analyze URL addresses of the web pages and establish a website-structure in accordance with the URL addresses of the web pages. The website-structure has a plurality of website-structure levels in which respectively have at least one of web pages. The browse-associating table generator is operatively configured to reestablish guiding links of the web pages to generate a criss-cross browse-associating table or a bilateral browse-associating table. The criss-cross browse-associating table and the bilateral browse-associating table respectively record reestablished guiding links of the web pages, a criss-cross structure and a bilateral structure are formed by the reestablished guiding links of the web pages.

Sum up, the website simplifying method and the website simplifying device provided by the embodiment of the present disclosure can reestablish the web pages of the website as the criss-cross structure or the bilateral structure. Since the criss-cross structure or the bilateral structure is utilized, the users can operate or browse the web pages of the website by a more intuitive manner.

It is to be understood that both the foregoing general description and the following detailed description are by examples, and are intended to provide further explanation of the invention as claimed.

### BRIEF DESCRIPTION OF THE DRAWINGS

The disclosure can be more fully understood by reading the following detailed description of the embodiment, with reference made to the accompanying drawings as follows.
FIG. 1 is a schematic diagram illustrating a website simplifying device according to an embodiment of the present disclosure.
FIG. 2 is a flowchart illustrating a website simplifying method according to an embodiment of the present disclosure.
FIG. 3 is a schematic diagram illustrating of establishing a website-structure according to an embodiment of the present disclosure.
FIG.4 is a schematic diagram illustrating the website-structure according to the embodiment of the present disclosure.
FIG. 5 is flowchart illustrating of generating a criss-cross browse-associating table according to an embodiment of the present disclosure.
FIG. 6 is schematic diagram illustrating the criss-cross browse-associating table according to the embodiment of the present disclosure.
FIG. 7 is flowchart illustrating of generating a bilateral browse-associating table according to an embodiment of the present disclosure.
FIG. 8 is schematic diagram illustrating the bilateral browse-associating table according to the embodiment of the present disclosure.
FIG. 9 is a schematic diagram illustrating a website simplifying device according to another embodiment of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

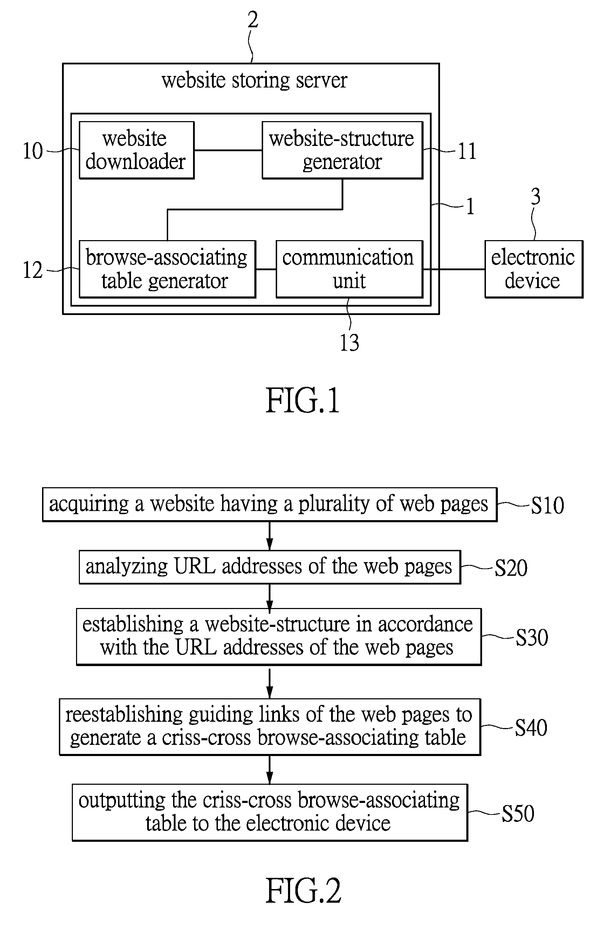

Please refer to FIG. 1, which is a schematic diagram illustrating a website simplifying device according to an embodiment of the present disclosure. The website simplifying device 1 is disposed in a website storing server 2. A storing device of the website storing server 2 (not illustrated in FIG. 1) stores related information about at least one website, and at least one of web pages of the website are delivered through HTTP protocol or HTTPS protocol to supply the users browsing. The website simplifying device 1 includes a website downloader 10, a website-structure generator 11, a browse-associating table generator 12, and a communication unit 13. The website downloader 10 is coupled to the website-structure generator 11. The website-structure generator 11 is coupled to the browse-associating table generator 12. The browse-associating table generator 12 is coupled to the communication unit 13. The communication unit 13 is coupled to at least one electronic device 3.

The website downloader 10 includes suitable circuitry, logic, and/or code, which is configured to store the related information about the website downloaded from the storing device of the website storing server 2. Specifically, the website downloader 10 will download all Uniform Resource Locator (URL) addresses corresponding to the web pages within the website from the website storing server 2. The URL address records the information consisting of a communication protocol, a server name, a file path, and a file name.

Taking a URL address of "http://www.vogue.com.tw/fashion/ fashionnews/index.asp?iPage=1" as an example, the word of "http" is the communication protocol, the word group of "www.vogue.com.tw" is the server name, the word group of "/fashion/fashionnews/" is the file path, and the word group of "index.asp?iPage=1" the file name. The structure of the URL address is known by the person skilled in the art, thus there is omitted thereto.

The website-structure generator 11 includes suitable circuitry, logic, and/or code, which is configured to analyze the URL addresses of the web pages. The website-structure generator 11 respectively separates the URL addresses into a plurality of parts in accordance with at least one of specific symbols within each URL addresses. For example, after receiving the URL address of "http://www.vogue.com.tw/fashion", the website-structure generator 11 separates the URL address into three parts of "http", "www.vogue.com.tw", and "fashion" in accordance with at least one of a word group formed by colon and double-slash such as "://", a Slash mark such as "/", a Question mark such as "?", and a And mark such as "&".

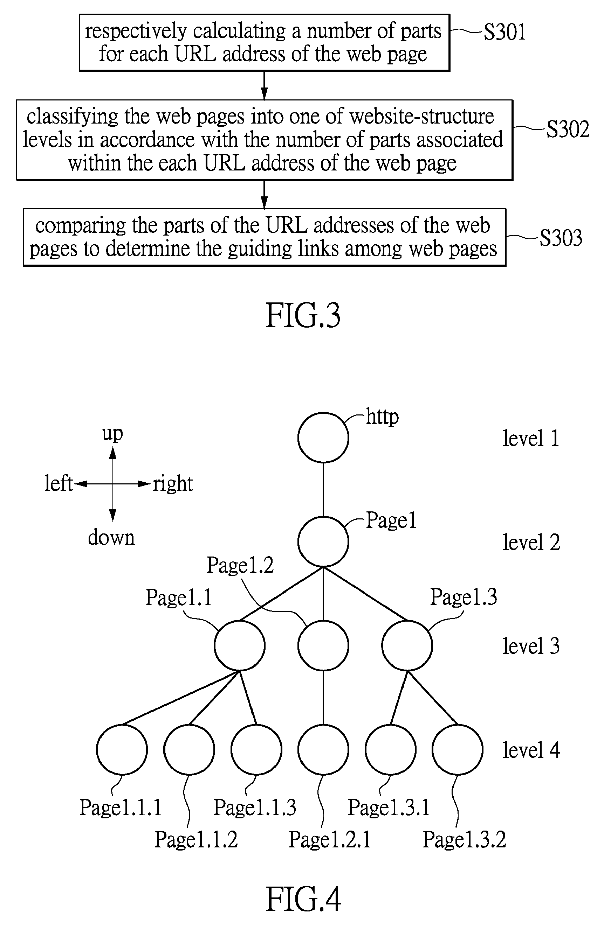

After that, the website-structure generator 11 establishes a website-structure associated with the website in accordance with analyzed URL addresses of the web pages. The website-structure, which includes a plurality of website-structure levels in which respectively have at least one of web pages, is such as tree structure. However, the steps of establishing website-structure are further illustrated in conjunction with FIGs. 3 and 4 hereafter.

The browse-associating table generator 12 includes suitable circuitry, logic, and/or code, which is configured to reestablish guiding links of the web pages to generate a criss-cross browse-associating table or a bilateral browse-associating table. The guiding link is a link relationship between two web pages. Those main pages and subpages depended on it can be guided to link to each other according to the guiding link.

The criss-cross browse-associating table and the bilateral browse-associating table, which respectively have the reestablished guiding links of the web pages, are configured to indicate a browsing order of those web pages. In the embodiment, the browse-associating table generator 12 reestablishes the website-structure as a criss-cross structure, and generates the criss-cross browse-associating table in accordance with the website associated with the criss-cross structure. In the website associated with the criss-cross structure, each web page includes at most four of guiding links. The web page is guided to another web page based on the guiding links of different directions. In other words, the criss-cross structure is formed by the guiding links of those reestablished web pages.

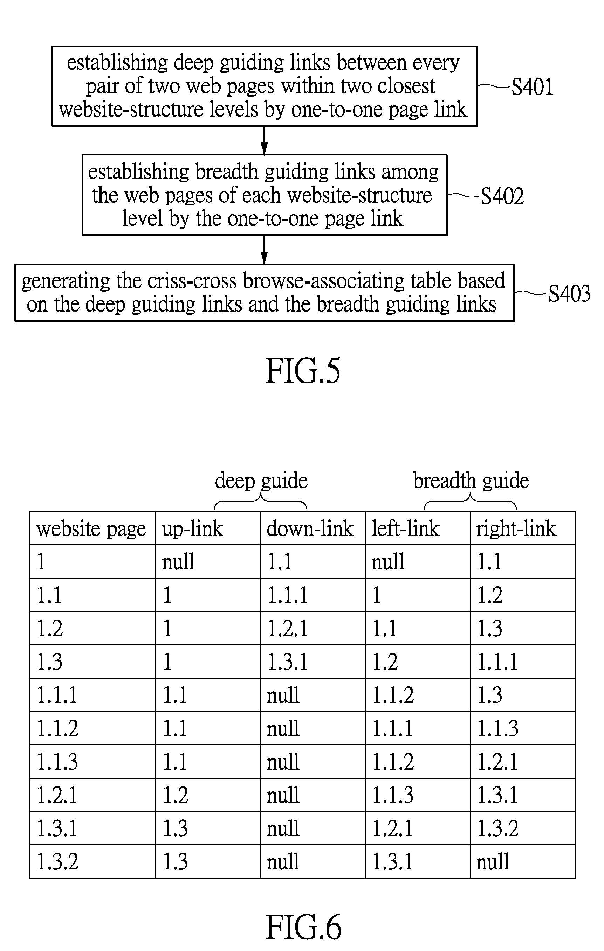

For example, each Uplink, Downlink, Leftlink, or Rightlink of the web page respectively guides to one another web page only. As a result, the users can browse the website by operating arrow keys on the keyboard. Or, the users can browse the website by making gestures of gliding up, gliding down, gliding left, or gliding right on the touch screen. By the way, the arrow keys and the gestures of the gliding up, the gliding down, the gliding left, and the gliding right are only illustrated for example, thus there is not limited the present disclosure herein. In practice, the person skilled in the art can design an operating manner according to the requirement for browsing the website. However, hereafter further illustrates the steps of establishing the criss-cross browse-associating table by the browse-associating table generator 12 with FIGs. 5 and 6.

In other embodiment, the browse-associating table generator 12 reestablishes the website-structure as a bilateral structure, and generates the bilateral browse-associating table in accordance with the website associated with the bilateral structure. In the website associated with the bilateral structure, each web page includes at most two of guiding links. The web page is guided to one another web page based on the guiding link. In other words, the guiding links of those reestablished web pages form the bilateral structure.

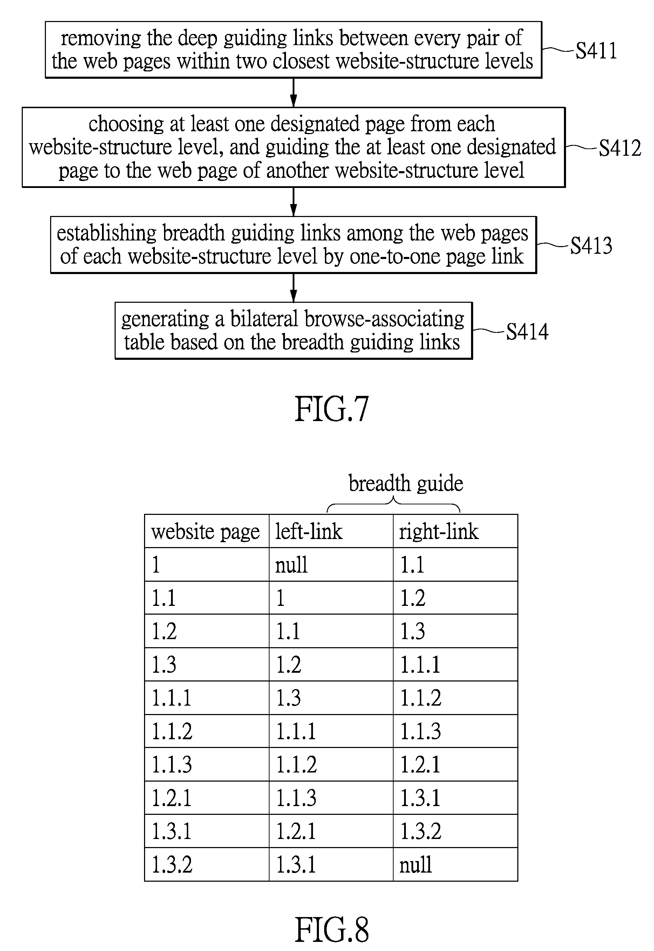

For example, each Leftlink or Rightlink of the web page respectively guides to one another web page only. As a result, the users can browse the website by operating left/rights key on the keyboard. Or, the users can browse the website by making gestures of the gliding left or the gliding right on the touch screen. By the way, the left/right keys and the gestures of the gliding left and the gliding right are only illustrated for example, thus there is not limited the present disclosure herein. In practice, the person skilled in the art can design an operating manner according to the requirement for browsing the website. However, hereafter further illustrates the steps of establishing the bilateral browse-associating table by the browse-associating table generator 12 with FIGs. 7 and 8.

The communication unit 13 including suitable circuitry, logic, and/or code, which is configured to output the criss-cross browse-associating table or the bilateral browse-associating table to the electronic device 3 so that the electronic device 3 browses the web pages of the website in accordance with the criss-cross browse-associating table or the bilateral browse-associating table. The communication unit 13 can communicate with the electronic device 3 in a wireless manner or a wire manner, the present disclosure is not limited thereto. Additionally, the present disclosure is not limited the number of the electronic devices 3. In other embodiment, the communication unit 13 is coupled to a plurality of the electronic devices 3, and output the criss-cross browse-associating table or the bilateral browse-associating table to those electronic devices 3.

Next, the flowchart about the operation of the website simplifying device 1 is illustrated as follow. Please refer to FIG. 2 in conjunction with FIG. 1, which is a flowchart illustrating a website simplifying method according to an embodiment of the present disclosure. The website simplifying method of FIG.2 is adapted for website simplifying device 1 of FIG. 1. In the step S10, the website downloader 10 acquires a website having a plurality of web pages from the storing device of the website storing server 2, and delivers the related information of the website to the website-structure generator 11. In the step S20, the website-structure generator 11 analyzes each URL address of the web page to separate it into a plurality of parts. In the step S30, the website-structure generator 11 establishes a website-structure associated with the website in accordance with the analyzed URL addresses of the web pages.

In the step S40, the browse-associating table generator 12 reestablishes guiding links of the web pages to generate a criss-cross browse-associating table. In the step S50, the browse-associating table generator 12 outputs the criss-cross browse-associating table to the electronic device 3 so that the electronic device 3 browses the web pages of the website in accordance with the criss-cross browse-associating table.

Furthermore, please refer to FIGs. 3 and FIG. 4. FIG. 3 is a schematic diagram illustrating of establishing a website-structure according to an embodiment of the present disclosure. FIG. 4 is a schematic diagram illustrating the website-structure according to the embodiment of the present disclosure. In the step S301, the website-structure generator 11 respectively calculates a number of parts for each URL address of the web page after analyzing those URL addresses. Taking a URL address of "http://www.vogue.com.tw/fashion" as an example, the URL address records three parts of "http", "www.vogue.com.tw", and "fashion". Taking another URL address of "http://www.vogue.com.tw/fashion/fashionnews" as an example, the URL address records four parts of "http", "www.vogue.com.tw", "fashion", and "fashionnews".

In the step S302, the website-structure generator 11 classifies the web pages into one of website-structure levels in accordance with the number of parts associated within the each URL address of the web page. In other words, those web pages, which have the same number of parts, are classified into the same one of the website-structure levels. As shown in FIG. 4, the website-structure includes four website-structure levels. The web page having one part is classified into a level 1. The web page having two parts is classified into a level 2. The web page having three parts is classified into a level 3. The web page having four parts is classified into a level 4.

For example, firstly, the website-structure generator 11 respectively separates the URL addresses of "http://www.vogue.com.tw", "http://www.vogue.com.tw/fashion", "http://www.vogue.com.tw/collection", and "http://www.vogue.com.tw/fashion/fashionnews" into a plurality of parts, and then calculates a number of parts within each URL address.

The level 1 of the website-structure is represented to the communication protocol of the website as "http". Since all of the above four URL addresses utilize the HTTP communication protocol, those are extended from the level 1.

The URL address of "http://www.vogue.com.tw" includes two parts. The web page corresponding to the URL address is referred as "Page1" hereinafter. The URL addresses of "http://www.vogue.com.tw/fashion" and "http://www.vogue.com.tw/collection" respectively include three parts. The two web pages corresponding to the URL address are referred as "Page1.1" and "Page1.2" hereinafter. The URL address of "http://www.vogue.com.tw/fashion/fashionnews" includes four parts. The web page corresponding to the URL address is referred as "pages.1.1" hereinafter. Therefore, the web page Page1 is classified into the level 2 of the website-structure; the web pages Page1.1 and Page1.2 are classified into the level 3 of the website-structure; and the web page Page1.1.1 is classified into the level 4 of the website-structure.

In the step S303, the website-structure generator 11 compares the parts of the URL addresses of the web page to determine the guiding links among web pages to establish the website-structure. The website-structure generator 11 determines that the web pages Page1.1 and Page1.2 are both the subpages of the web page Page1 based on the structure associated with the URL addresses of the web pages Page1.1 and Page1.2. Thus, the website-structure generator 11 guides the web pages Page1.1 and Page1.2 to the web page Page1. After that, the website-structure generator 11 determines that the web pages Page1.1.1 is the subpage of the web page Page1.1 based on the structure associated with the URL addresses of the web pages Page1.1.1. Thus, the website-structure generator 11 guides the web page Page1.1.1 to the web page Page1.1.

And so on, the website-structure generator 11 similarly determines the guiding links of other web pages based on the parts of those URL addresses. According to FIG. 4, the web pages Page1.1, Page1.2, and Page1.3 within the level 3 are the subpages of the web page Page1. The web pages Page1.1.1, Page1.1.2, and Page1.1.3 within the level 4 are the subpages of the web page Page1.1. The web pages Page1.2.1 within the level 4 is the subpage of the web page Page1.2. The web pages Page1.3.1, Page1.3.2, and Page1.3.3 within the level 4 are the subpages of the web page Page1.3.

By the way, the website-structure shown in FIG.4 is illustrated for example, there is not limited the present disclosure thereto. In other embodiment, the website-structure may include more levels, and the number of web pages of each level also may be difference.

FIGs. 5 and 6 are illustrating how to establish the criss-cross browse-associating table. FIG. 5 is flowchart illustrating of generating a criss-cross browse-associating table according to an embodiment of the present disclosure. FIG. 6 is schematic diagram illustrating the criss-cross browse-associating table according to the embodiment of the present disclosure. In the step S401, the browse-associating table generator 12 receives the website-structure delivered from the website-structure generator 11, and establishes deep guiding links between every pair of the web pages within two closest website-structure levels by one-to-one page link. In the embodiment, the browse-associating table generator 12 defines that the deep guiding link is a link between the Uplink or the Downlink, thus the web page can execute a page jump such as a deep guiding through the Uplink and the Downlink.

However, the deep guiding link is the guiding link between every pair of the web pages of two closest website-structure levels. That is, the deep guiding link is the guiding link between the main page and subpage. Taking the web page Pale1.1, the web page Page1.1 can jump to the web page Page1 by the Uplink and jump to one of the web pages Page1.1.1, Page1.1.2, and Page1.1.3 by the Downlinks. In other words, the web pages Page1.1.1, Page1.1.2, and Page1.1.3 are extended from the web page Page1.1.

It is worth noting, one web page within the website-structure may include a plurality of subpages. The browse-associating table generator 12 may establish a guiding link between the web page and one of those subpages as the deep guiding link when reestablishing the guiding links of the website. Next, the browse-associating table generator 12 further establishes a guiding link between the forgoing subpage and another subpage both in the same level. In other words, the web page is guided to its subpage by a one-to-one page link. For example, shown as FIG. 4, the subpages depended on the web page Page1.1 are such as the web pages Page1.1.1, Page1.1.2, and Page1.1.3. When reestablishing the guiding links, the browse-associating table generator 12 guides the web page Page.1 to the web page Page1.1.1. At this time, the web page Page1.1 cannot be directly jumped to the web pages Page1.1.2 and Page1.1.3 by the deep guiding link. Instead, the web page Page1.1 has to firstly jump to the web page Page1.1.1 and then jumps to the web pages Page1.1.2 or Page1.1.3 through breadth guiding links illustrated as follow.

In the step S402, the browse-associating table generator 12 establishes the breadth guiding links among the web pages within each website-structure level by the one-to-one page link. The web pages within the same website-structure level can jump to each other based on the breadth guiding links, without go back to the main page associated with those web pages within a higher website-structure level. Thus, the breadth guiding link is the guiding link among the web pages within each website-structure level. In the embodiment, the browse-associating table generator 12 defines the breadth guiding link as a link between the Leftlink and the Rightlink, thus the web page can execute a page jump such as a breadth guiding through the Leftlink and the Rightlink.

Taking the web page Page1.1, there is no guiding link between the web pages Page1.1 and Page1.2 directly. If the web page Page1.1 is going to be jumped to web page Page1.2, the web page Page1.1 has to be jumped back to the web page Page1, so that jumps to the web page Page1.2 from the web page Page1. However, after establishing the breadth guiding links, the web page Page1.1 can jump to the web page Page1.2 without go back to the web page Page1. As the same, the web page Page1.2 also can jump to the web pages Page1.1 or Page1.3.

The browse-associating table generator 12 simplifies the links among the web pages within each website-structure level, which expresses the Leftlink of each web page guides to only one web page, and the Rightlink of each web page also guides to only one web page.

By the way, the embodiment provides a manner of linking two closest web pages to each other within the same website-structure level. However, the present disclosure is not limited thereto, that is, the present disclosure also can be implemented by linking any two web pages within the same website-structure level. For example, the browse-associating table generator 12 guides the web page Page1.1 to the web page Page1.3, and then guides the web page Page1.3 to the web page Page1.2, thus there is no direct guiding link between the web pages Page1.1 and Page1.2.

In the embodiment, the browse-associating table generator 12 will change a jumping mode from the breadth guide to the deep guide if the web page cannot jump by the breadth guiding links. For example, due to the web page Page1.3 cannot jump by the Leftlink of the breadth guiding link, the browse-associating table generator 12 guides the web page Page1.3 to one of the web pages within the level 4 of the website-structure level (i.e., web page Page1.1.1). On the other hand, due to the web page Page1.1.1 cannot jump by the Rightlink of the breadth guiding link, the browse-associating table generator 12 guides the web page Page1.1.1 to the web page Page1.3 within the level 3 of the website-structure level.

In the embodiment, the browse-associating table generator 12 will not change a jumping mode from the breadth guide to the deep guide if the web page cannot jump by the breadth guiding links. Instead, the browse-associating table generator 12 endures the jumping mode of the breadth guide, and guides the web page to another web page within the same website-structure level. For example, due to the web page Page1.3 cannot jump by the Leftlink of the breadth guiding link, the browse-associating table generator 12 guides the web page Page1.3 to the web page Page1.1 within the same of the website-structure level. On the other hand, due to the web page Page1.1 cannot jump by the Rightlink of the breadth guiding link, the browse-associating table generator 12 guides the web page Page1.1 to the web page Page1.3 within the same of the website-structure level.

In the step S403, the browse-associating table generator 12 reestablishes guiding links of the website-structure shown in FIG. 4 as the criss-cross structure based on the forgoing deep guiding links and breadth guiding links, to generate a criss-cross browse-associating table shown in FIG. 6.

By reestablishing the website-structure as the criss-cross structure, the website-structure can be simplified. Each web page of the simplified website only includes four guiding links consisting of an Uplink, a Downlink, a Rightlink, and a Leftlink, wherein the Uplink, the Downlink, the Rightlink, and the Leftlink are respectively guided to only one web page. Thus, the electronic device 3 can browse the web pages of the website based on the signals of breadth guiding signals and deep guiding signals which are generated by the arrow keys, and provides an intuitive browsing manner for the users.

In addition, the browse-associating table generator 12 also can reestablish the website-structure as a bilateral structure, and generates a bilateral browse-associating table according to the website associated with the bilateral structure. Please refer to FIGs. 7 and 8. FIG. 7 is flowchart illustrating of generating a bilateral browse-associating table according to an embodiment of the present disclosure. FIG. 8 is schematic diagram illustrating the bilateral browse-associating table according to the embodiment of the present disclosure. In the step S411, the browse-associating table generator 12 receives the website-structure delivered from the website-structure generator 11, and removes the deep guiding links between every pair of the web pages of two closest website-structure levels. In other words, the browse-associating table generator 12 removes the deep guiding links about the link between the levels 1, 2, the link between the levels 2, 3, and the link between the levels 3, 4.

In the step S412, the browse-associating table generator 12 chooses at least one designated page from each website-structure level, and then guides the at least one designated page to the web page of another website-structure level. It is worth to note, two levels are guided to each other by only one link. For example, the browse-associating table generator 12 guides the web page Page1.1 of the level 3 to the web page Page1 of the level 2, and guides the web page Page1.3 to the web page Page1.1.1 of the level 4. The web page Page1.1 of the level 3 is the only linked to the web pages of the level 2, and the web page Page1.3 of the level 3 is the only linked to the web pages of the level 4.

In the step S413, the browse-associating table generator 12 establishes the breadth guiding links among the web pages of each website-structure level by one-to-one page link. That is similar to step S402 of FIG. 5, the browse-associating table generator 12 respectively links two closest pages within the level 1, the level 2, or the level 3. In the embodiment, the browse-associating table generator 12 defines the breadth guiding link as a link between the Leftlink and the Rightlink, thus the web page can execute a page jump such as a breadth guiding through the left-link and the right-link.

In the step S414, the browse-associating table generator 12 reestablishes guiding links of the website-structure shown in FIG. 4 as the bilateral structure based on the forgoing breadth guiding links, to generate a bilateral browse-associating table shown in FIG. 8. For the bilateral structure, each web page only jumps to other one of the web pages within the same level by the Leftlink or the Rightlink of the breadth guiding link, and cannot jump to other one of the web pages within other levels by the deep guiding link. However, the designated page is necessary so that the web page jumps to another web page within the different level.

Therefore, the website-structure can be simplified as the bilateral structure (or a flat structure). Each web page of the simplified website only includes two guiding links consisting of the Rightlink, and the Leftlink, wherein the Rightlink, and the Leftlink are respectively guided to only one web page. Thus, the electronic device 3 can browse the web pages of the website by the left/right keys.

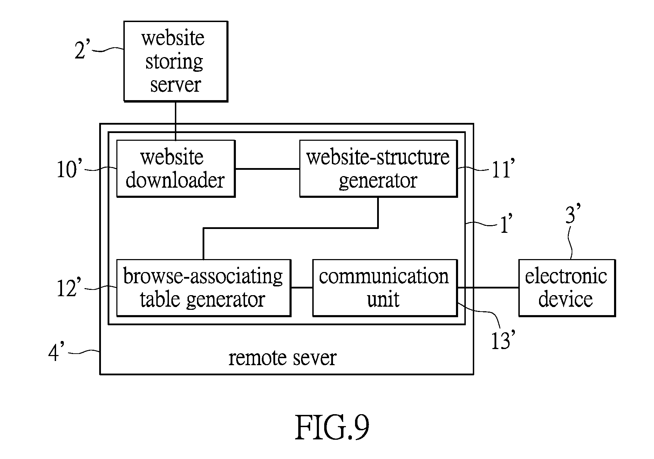

Please refer to FIG. 9, which is a schematic diagram illustrating a website simplifying device according to another embodiment of the present disclosure. The website simplifying device 1' is similar to the website simplifying device 1 shown in FIG. 1, which includes a website downloader 10', a website-structure generator 11', a browse-associating table generator 12', and a communication unit 13'. The connections and operations of the website simplifying device 1'are also similar to the website simplifying device 1 shown in FIG. 1, there is omitted thereto.

Comparing with the website simplifying device 1 in FIG. 1, the website simplifying device 1' is not deposed in the website storing server, but is deposed in a remote server 4'. The remote server 4' can be implemented as a server established by third parts. The remote server 4' is coupled to the website storing server, and receives related information of at least one website from the website storing server to execute the website simplifying method.

By going through the above stages, the website simplifying method and the website simplifying device provided by the embodiment of the present disclosure can reestablish the web pages of the website as the criss-cross structure or the bilateral structure. Since the criss-cross structure or the bilateral structure is utilized, the users can operate or browse the web pages of the website by a more intuitive manner.

Although the present invention has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. A website simplifying method, adapted for a website simplifying device (1), comprising:
STEP A: acquiring a website having a plurality of web pages;
STEP B: analyzing Uniform Resource Locator (URL) addresses of the web pages;
STEP C: establishing a website-structure in accordance with the URL addresses of the web pages, wherein the website-structure has a plurality of website-structure levels in which respectively have at least one of web pages; and
STEP D: reestablishing guiding links of the web pages to generate a criss-cross browse-associating table, wherein the criss-cross browse-associating table records reestablished guiding links of the web pages and a criss-cross structure is formed by the reestablished guiding links of the web pages.

2. The website simplifying method of claim 1, the STEP B further comprising:
STEP B-1: respectively separating the URL addresses into a plurality of parts in accordance with at least one of specific symbols within each URL address, wherein the specific symbol comprises at least one of a word group formed by a colon and a double-slash, a Slash mark, a Question mark, and an And mark..

3. The website simplifying method of claim 2, the STEP C further comprising:
STEP C-1: respectively calculating a number of parts within the URL addresses;
STEP C-2: respectively classifying each web page into one of the website-structure levels in accordance with the number of parts associated within each URL address, wherein the web pages having the same number of parts are classified into the same one of the website-structure levels; and
STEP C-3: comparing the parts of the URL addresses corresponding to the web pages to determine the guiding links among the web pages, so as to establish the website-structure.

4. The website simplifying method of claim 1, the STEP D further comprising:
STEP D-1: establishing deep guiding links between every pair of the web pages within two closest website-structure levels by one-to-one page link, wherein the deep guiding link is the guiding link between the web pages of each two closest website-structure levels;
STEP D-2: establishing breadth guiding links among the web pages of each website-structure level by the one-to-one page link, wherein the breadth guiding links are the guiding links among the web pages within each website-structure level; and
STEP D-3: generating the criss-cross browse-associating table based on the deep guiding links and the breadth guiding links.

5. A website simplifying method, adapted for a website simplifying device (1), comprising:
STEP A: acquiring a website having a plurality of web pages;
STEP B: analyzing URL addresses of the web pages;
STEP C: establishing a website-structure in accordance with the URL addresses of the web pages, wherein the website-structure has a plurality of website-structure levels in which respectively have at least one of web pages ; and
STEP D: reestablishing guiding links of the web pages to generate a bilateral browse-associating table, wherein the bilateral browse-associating table records reestablished guiding links of the web pages and a bilateral structure is formed by the reestablished guiding links of the web pages.

6. The website simplifying method of claim 5, the STEP B further comprising:
STEP B-1: respectively separating the URL addresses into a plurality of parts in accordance with at least one of specific symbols within each URL address, wherein the specific symbol comprises at least one of a word group formed by a colon and a double-slash, a Slash mark, a Question mark, and an And mark.

7. The website simplifying method of claim 6, the STEP C further comprising:
STEP C-1: respectively calculating a number of parts within the URL addresses;
STEP C-2: respectively classifying each web page into one of the website-structure levels in accordance with the number of parts associated within each URL addresses, wherein the web pages having the same number of parts are classified into the same one of the website-structure levels; and
STEP C-3: comparing the parts of the URL address corresponding to the web page to determine the guiding links among the web pages, so as to establish the website-structure.

8. The website simplifying method of claim 5, the STEP D further comprising:
STEP D-1: removing deep guiding links between every pair of the web pages within two closest website-structure levels, and choosing at least one designated page from each website-structure level to guide the at least one designated page to the web page of another website-structure level, wherein the deep guiding link is the guiding link between the web pages of each two closest website-structure levels;
STEP D-2: establishing breadth guiding links among the web pages of each website-structure level by one-to-one page link, wherein the breadth guiding links are the guiding links among the web pages within each website-structure level; and
STEP D-3: generating the bilateral browse-associating table based on the breadth guiding links.

9. A website simplifying device (1), for executing a website simplifying method, comprising:
a website downloader (10), operatively configured to acquire a website having a plurality of web pages;
a website-structure generator (11), coupled to the website downloader (10), operatively configured to analyze URL addresses of the web pages and establish a website-structure in accordance with the URL addresses of the web pages, wherein the website-structure has a plurality of website-structure levels in which respectively have at least one of web pages;
a browse-associating table generator (12), coupled to the website-structure generator (11), operatively configured to reestablish guiding links of the web pages to generate a criss-cross browse-associating table or a bilateral browse-associating table, wherein the criss-cross browse-associating table and the bilateral browse-associating table respectively record reestablished guiding links of the web pages, a criss-cross structure or a bilateral structure are formed by the reestablished guiding links of the web pages.

10. The website simplifying device (1) of claim 9, wherein the website-structure generator (11) respectively separates the URL addresses into a plurality of parts in accordance with at least one of specific symbols within each URL address, wherein the specific symbol comprises at least one of a word group formed by a colon and a double-slash, a Slash mark, a Question mark, and an And mark.

11. The website simplifying device (1) of claim 10, the website-structure generator (11) further operatively configured to:
respectively calculate a number of parts within the URL addresses;
respectively classify each web page into one of the website-structure levels in accordance with the number of parts associated within each URL address, wherein the web pages having the same number of parts are classified into the same one of the website-structure levels; and
compare the parts of the URL address corresponding to the web page to determine the guiding links among the web pages, so as to establish the web site- structure.

12. The website simplifying device (1) of claim 9, the browse-associating table generator (12) further operatively configured to:
establish deep guiding links between web pages of two closest website-structure levels by one-to-one page link, wherein the deep guiding link is the guiding link between every pair of the web pages within two closest website-structure levels;
establish breadth guiding links among the web pages of each website-structure level by the one-to-one page link, wherein the breadth guiding links are the guiding links among the web pages within each website-structure level; and
generate the criss-cross browse-associating table based on the deep guiding links and the breadth guiding links.

13. The website simplifying device (1) of claim 9, the browse-associating table generator (12) further operatively configured to:
remove deep guiding links between every pair of the web pages within two closest website-structure levels, and choosing at least one designated page from each website-structure level to guide the at least one designated page to the web page of another website-structure level;
establish breadth guiding links among the web pages of each website-structure level by one-to-one page link, wherein the breadth guiding links are the guiding links among the web pages within each website-structure level; and
generate the bilateral browse-associating table based on the breadth guiding links.

14. The website simplifying device (1) of claim 9, further comprising:
a communication unit (13), coupled to the browse-associating table generator (12), operatively configured to output the criss-cross browse-associating table or the bilateral browse-associating table to an electronic device (3) so that the electronic device (3) browses the web pages of the website in accordance with the criss-cross browse-associating table or the bilateral browse-associating table.

15. The website simplifying device (1) of claim 9, wherein the website simplifying device (1) is adapted for a website storing server (2), wherein the website storing server (2) stores at least one website; or the website simplifying device (1) is adapted for a remote server (4), wherein the remote server (4) is connected to the website storing server (2) and acquires the at least one website from the website storing server (2) for executing the website simplifying method.
